# FASCICULE DE BREVET EUROPEEN

(11) **EP 1 934 136 B1**
(45) Date de publication et mention de la délivrance du brevet: **18.02.2009**
(21) Numéro de dépôt: 06831209.9
(22) Date de dépôt: 21.09.2006
(51) Int. Cl.: C01B 3/56, B01D 53/047, C10G 5/06

(54) **PROCEDE DE PRODUCTION D'UN FLUX GAZEUX ENRICHI EN HYDROGENE A PARTIR DE FLUX GAZEUX HYDROGENES COMPRENANT DES HYDROCARBURES**
VERFAHREN ZUR HERSTELLUNG EINES WASSERSTOFFANGEREICHERTEN GASSTROMS AUS KOHLENWASSERSTOFFEN ENTHALTENDEN HYDRIERTEN GASSTRÖMEN
METHOD FOR PRODUCING A HYDROGEN-ENRICHED GAS STREAM FROM HYDROGENATED GAS STREAMS COMPRISING HYDROCARBONS

(30) Priorité: 30.09.2005 FR 0552972
(43) Date de publication de la demande: 25.06.2008
(73) Titulaire: L'AIR LIQUIDE, Société Anonyme pour l'Etude et l'Exploitation des Procédés Georges Claude, 75007 Paris (FR)
(72) Inventeur: HAULLE, François-Xavier, F-75015 Paris (FR); GERARD, Sylvain, F-92150 Suresnes (FR); ALBAN, Bruno, F-91300 Massy (FR); PUDYS, Vincent, F-75014 Paris (FR)
(74) Mandataire: Conan, Philippe Claude
(86) Numéro de dépôt international: PCT/FR2006/050921
(87) Numéro de publication internationale: WO 2007/036660

(56) Documents cités:
- WO-A-03/051482
- FR-A- 2 861 717
- US-A- 4 547 205

## Description

La présente invention concerne un procédé de valorisation de différents flux à base d'hydrogène et d'hydrocarbures de manière à produire un flux en hydrogène de haute pureté.

Les raffineries ou les usines pétrochimiques utilisent de grandes quantités de flux hydrogénés, de préférence de haute pureté. Dans de nombreux cas industriels, les performances des unités, et notamment les grades des produits fabriqués, sont limitées par la pureté de l'hydrogène d'alimentation. Par ailleurs, dans ces unités, on est parfois contraint d'éliminer des gaz encore riches en hydrogène sous l'effet des purges de gaz de recyclage. Ceci entraîne un surcoût d'opération de l'unité. Afin d'éviter ces problèmes, des procédés de récupération de l'hydrogène dans les flux de plus ou moins basse pureté pour produire des flux hydrogénés de haute pureté ont été proposés, notamment dans la demande WO 2005/042640 qui propose de mettre en oeuvre une unité d'adsorption modulée en pression pour traiter ces différents flux hydrogénés et obtenir un flux de haute pureté. Ce type d'unité d'adsorption modulée en pression peut représenter un investissement important en terme de coût d'adsorbant et de coût de compresseur.

Le but de la présente invention est de proposer un procédé de valorisation de différents flux à base d'hydrogène et d'hydrocarbures de manière à produire un flux en hydrogène de haute pureté, un gaz de pétrole liquéfié et un gaz résiduaire, dont le coût d'investissement soit diminué tout en augmentant le rendement de production d'hydrogène de haute pureté.

Un autre but de la présente invention est de proposer un procédé de valorisation de différents flux à base d'hydrogène et d'hydrocarbures de manière à produire un flux en hydrogène de haute pureté, un gaz de pétrole liquéfié et un gaz résiduaire, dont la consommation énergétique soit optimisée.

Dans ce but, l'invention concerne un procédé de production d'un flux gazeux enrichi en hydrogène et d'un gaz de pétrole liquéfié à partir d'au moins un flux gazeux comprenant majoritairement de l'hydrogène de pression P et d'un flux gazeux comprenant de l'hydrogène et des hydrocarbures, dans lequel on met en oeuvre les étapes suivantes :
- au cours de l'étape a), on ajuste à la pression P le flux gazeux comprenant de l'hydrogène et des hydrocarbures,
- au cours de l'étape b), on traite le flux gazeux comprenant de l'hydrogène et des hydrocarbures et ajusté à la pression P dans une unité d'adsorption de gaz modulée en pression alimentée par le flux gazeux comprenant majoritairement de l'hydrogène et présentant une pression P de manière à fournir :
   . en une première sortie, le flux gazeux enrichi en hydrogène présentant une concentration en hydrogène supérieure à celle du flux gazeux comprenant majoritairement de l'hydrogène et,
   . en une deuxième sortie, un flux résiduaire,
caractérisé en ce qu'entre l'étape a) et l'étape b), on abaisse la température du flux gazeux comprenant de l'hydrogène et des hydrocarbures et ajusté à la pression P de manière à condenser les hydrocarbures et à former le gaz de pétrole liquéfié.

Le procédé selon l'invention permet le traitement de deux flux gazeux comprenant de l'hydrogène à différentes concentrations de manière à produire un flux gazeux enrichi en hydrogène, un gaz de pétrole liquéfié (ou " liquefied petroleum gas" en anglais ou GPL) et un gaz résiduaire. Le premier flux gazeux traité est un flux gazeux comprenant majoritairement de l'hydrogène, c'est-à-dire présentant une concentration en hydrogène comprise entre 50 et 99 % en volume. Ce flux comprend également des hydrocarbures ayant de 1 à 8 atomes de carbone et des composés tels que CO, CO₂, H₂S, ... Le deuxième flux traité est un flux gazeux comprenant de l'hydrogène et des hydrocarbures présentant une concentration en hydrogène inférieure d'au moins 10 % par rapport à la valeur de la concentration en hydrogène du flux gazeux comprenant majoritairement de l'hydrogène, de préférence inférieure d'au moins 15 % et encore plus préférentiellement inférieure de 15 à 50 %. Ce deuxième flux comprend également des hydrocarbures ayant de 1 à 8 atomes de carbone, ainsi que des composés tels que H₂O, H₂S, ... En général, ce deuxième flux gazeux présente une concentration en hydrocarbures comprise entre 10 et 50 % en volume. Selon l'invention, la pression de ce deuxième flux gazeux comprenant de l'hydrogène et des hydrocarbures est ajustée de manière à ce qu'elle soit proche de P, soit par compression, soit par perte de charge selon la provenance de ce flux. Il se peut également que ce flux présente déjà une pression P, dans ce cas il est utilisé tel quel sans ajustement de pression. Ces différents flux peuvent être issus de la purge de la boucle gaz d'une unité d'hydrotraitement telle qu'une unité d'hydrodésulfuration ou d'hydrocraquage d'une raffinerie, ou encore telle qu'une unité d'hydrodésalkylation ou d'isomérisation d'un site pétrochimique. Le premier et le deuxième flux gazeux traités dans la présente invention peuvent être issus des mélanges de différentes purges de telles unités. Ces mélanges peuvent permettre d'atteindre la pression P désirée en associant des flux de pression inférieure à P et des flux de pression supérieure à P.

Par traitement de ces différents flux, l'invention permet d'enrichir le flux gazeux comprenant majoritairement de l'hydrogène. Cet enrichissement est obtenu par appauvrissement en hydrogène du deuxième flux gazeux comprenant de l'hydrogène et des hydrocarbures. L'unité produit ainsi le flux gazeux enrichi en hydrogène présentant généralement une pureté en hydrogène supérieure à 99 % en volume, et l'unité produit également un flux résiduaire de faible pureté en hydrogène et de faible pression qui peut être envoyé dans un réseau de gaz combustible. La pression et la concentration en hydrogène de flux résiduaire sont respectivement inférieures aux valeurs de pression et de concentration en hydrogène de tous les effluents rentrant dans l'unité (U). Ce flux résiduaire comprend également des hydrocarbures (C₁ à C₈) et les composés tels que H₂O, H₂S, CO, CO₂, ...

De préférence, l'unité (U) de séparation de gaz est une unité d'adsorption modulée en pression (PSA) associée à un compresseur intégré, dans lequel on met en oeuvre, pour chaque adsorbeur de l'unité, un cycle de modulation de pression comprenant une succession de phases qui définissent des phases d'adsorption, de décompression, de purge et de remontée en pression, telle que :
- au cours de la phase d'adsorption :
   . au cours d'une première étape, le flux gazeux comprenant majoritairement de l'hydrogène et présentant une pression P est mis en contact avec le lit de l'adsorbeur, et
   . au cours d'une deuxième étape, on introduit, au contact du lit de l'adsorbeur, le mélange de pression P dont la température a été abaissée de manière à condenser les hydrocarbures et constitué de :
      . d'une part, du flux gazeux comprenant de l'hydrogène et des hydrocarbures, et
      . d'autre part, du gaz de recycle du PSA,
   de manière à adsorber les composés différents de l'hydrogène et à produire en tête du lit de l'adsorbeur le flux enrichi présentant une concentration en hydrogène supérieure à celle du flux gazeux comprenant majoritairement de l'hydrogène,
- au cours de la phase de décompression, le flux résiduaire du PSA est produit,
- lors de la phase de purge, un gaz de purge est produit,
- et où le gaz de recycle du PSA est soit le flux résiduaire comprimé à la pression P, soit le gaz de purge comprimé à la pression P. Selon ce procédé PSA, dans une première phase d'adsorption, le flux gazeux comprenant majoritairement de l'hydrogène mis en contact avec un premier lit d'adsorbant du PSA et dans une deuxième phase, c'est le mélange du flux comprenant de l'hydrogène et des hydrocarbures et du gaz de recycle du PSA qui sont mis en contact avec ce premier ensemble d'adsorbant. Le gaz de recycle peut être constitué par deux gaz, seuls ou en mélange : le gaz résiduaire issu du PSA qui a été comprimé, et le gaz de purge issu du PSA qui a été comprimé. De préférence, il s'agit du gaz de purge et non du gaz résiduaire. Le gaz résiduaire est issu de l'étape finale de la phase de décompression du PSA et est pour partie comprimé par le compresseur intégré au PSA de l'unité de séparation de gaz (U) alors que le gaz de purge est issu de la phase de purge du PSA et est pour partie comprimé par ce même compresseur intégré au PSA avant d'être utilisé comme gaz de recycle. Ces deux gaz comprennent tous les deux de l'hydrogène et essentiellement des impuretés. Une fois comprimés, ils sont mélangés au flux comprenant de l'hydrogène et des hydrocarbures. Ce mélange peut se faire de différentes manières en fonction de la valeur de la pression du flux comprenant de l'hydrogène et des hydrocarbures. Ce flux comprenant de l'hydrogène et des hydrocarbures peut être mélangé au gaz résiduaire ou au gaz de purge, puis ce mélange peut être comprimé par le compresseur intégré au PSA jusqu'à la pression P. Si le flux comprenant de l'hydrogène et des hydrocarbures présente une pression supérieure à P, sa compression peut être évitée ; dans ce cas, seul le gaz résiduaire ou le gaz de purge est comprimé pour former le gaz de recycle. Avant son introduction dans le PSA, le mélange à la pression P du flux comprenant de l'hydrogène et des hydrocarbures et du gaz de recycle est traité de manière à abaisser sa température et condenser les hydrocarbures. Il peut être envisagé de réchauffer ensuite le flux comprenant de l'hydrogène et des hydrocarbures par échange de chaleur avec au moins un autre flux gazeux du procédé afin d'éviter d'envoyer un gaz froid au PSA. Ensuite, l'introduction dans le lit de l'adsorbant de ces gaz mélangés à la pression P permet leur retraitement. Au cours de la phase d'adsorption, les flux gazeux sont introduits en partie basse du lit dans le sens dit à co-courant. Au cours de cette étape de mise en contact, les composés les plus adsorbables différents de H₂, s'adsorbent sur l'adsorbant et un gaz comprenant essentiellement de l'hydrogène est produit à la pression P diminuée d'environ un bar de perte de charge. Lors de cette étape, l'hydrogène produit est généralement d'une pureté supérieure à au moins 99 % en mole, de préférence supérieure à au moins 99,5 %.

De manière à obtenir une purification efficace, l'adsorbant des lits du PSA doit notamment permettre l'adsorption et la désorption des impuretés. Le lit d'adsorbant est généralement composé d'un mélange de plusieurs adsorbants, ledit mélange comprenant par exemple au moins deux adsorbants choisis parmi : les charbons actifs, les gels de silice, les alumines ou les tamis moléculaires. De préférence, les gels de silice doivent présenter un volume poreux compris entre 0,4 et 0,8 cm³/g et une aire massique supérieure à 600 m²/g. De préférence, les alumines présentent un volume poreux supérieur à 0,2 cm³/g et une aire massique supérieure à 220 m²/g. Les zéolites ont de préférence une taille de pores inférieure à 4,2 Å, un rapport molaire Si/AI inférieur à 5 et contiennent Na et K. Les charbons actifs présentent de préférence une aire massique supérieure à 800 m²/g et une taille de micropores comprise entre 8 et 20 Å. Selon un mode préféré, chaque lit d'adsorbant du PSA est composé d'au moins trois couches d'adsorbants de natures différentes. Chaque lit d'adsorbant du PSA peut comprendre : en partie basse une couche de protection composée d'alumine et/ou de gel de silice surmonté d'une couche de charbon actif et/ou de tamis moléculaire carboné et éventuellement en partie haute d'une couche de tamis moléculaire. Les proportions varient en fonction de la nature du mélange gazeux à traiter (notamment en fonction de ses pourcentages en CH₄ et en hydrocarbures en C₃₊). Par exemple, un mélange gazeux dépourvu d'eau comprenant 75 % en mole d'H₂, 5 % de C₃₊ et 20 % d'hydrocarbures légers (C₁-C₂), de CO et de N₂ peut être traité par une unité d'adsorption dont les lits comprennent au moins 10 % en volume d'alumine et 15% en volume de gel de silice en lit bas, le complément étant obtenu par du charbon actif.

Lors de la phase de décompression du PSA, le gaz résiduaire est produit. Cette production du gaz résiduaire peut être obtenue par décompression à contre-courant initiée à une pression inférieure à P. Ce gaz résiduaire comprend les impuretés et présente une concentration en hydrogène inférieure à tous les flux introduits dans le PSA. Ce gaz résiduaire peut être évacué du procédé et brûlé ou réutilisé comme gaz de recycle dans le PSA comme indiqué précédemment.

La pression basse du cycle étant atteinte, une phase de purge est effectuée pour finaliser la régénération de l'adsorbeur. Au cours de la phase de purge, un gaz est introduit à contre-courant dans l'adsorbeur et, un gaz de purge est produit. Le gaz introduit à contre-courant dans l'adsorbeur au cours de la phase de purge est un flux gazeux issu d'une des étapes de la phase de décompression. Le gaz de purge est généralement utilisé comme gaz de recycle après recompression.

Au cours de la phase de remontée en pression, la pression de l'adsorbeur est augmentée par introduction à contre-courant de flux gazeux comprenant de l'hydrogène tel que le gaz produit au cours de différentes étapes de la phase de décompression.

Selon la caractéristique essentielle de l'invention, entre l'étape a) d'ajustement de la pression du flux gazeux comprenant de l'hydrogène et des hydrocarbures et l'étape b) de traitement de ce flux par l'unité (U) de séparation de gaz, on abaisse la température du flux gazeux comprenant de l'hydrogène et des hydrocarbures de manière à condenser les hydrocarbures, de préférence jusqu'à moins de 0°C, encore plus préférentiellement à moins de -20°C. De préférence, cet abaissement de température est réalisé au moyen d'un dispositif cryogénique, tel que des boucles cryogéniques (compression/détente) à l'ammoniaque ou au propane.

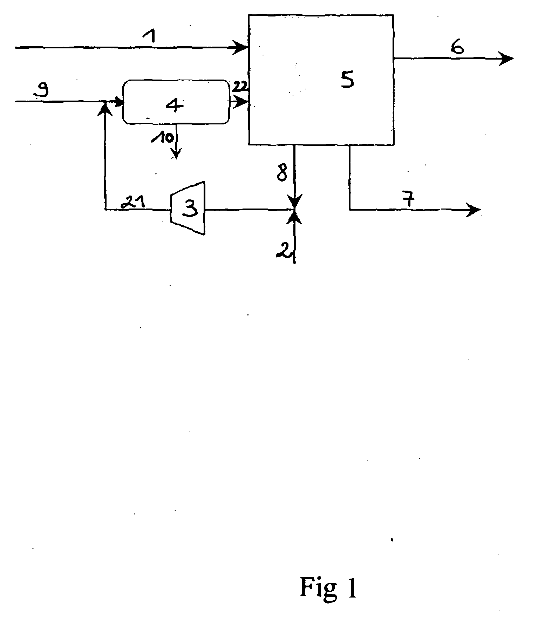

La figure 1 illustre le procédé selon l'invention. Le flux comprenant de l'hydrogène et des hydrocarbures 2 est compressé par le compresseur 3 pour présenter une pression P égale à celle du flux comprenant majoritairement de l'hydrogène 1. Le flux 21 comprenant de l'hydrogène et des hydrocarbures et comprimé est ensuite traité par un dispositif 4 permettant d'abaisser sa température et de condenser les hydrocarbures. Le dispositif 4 produit :
- d'une part, un flux liquide 10 d'hydrocarbures (LPG), et
- d'autre part, un flux gazeux comprenant de l'hydrogène et encore quelques hydrocarbures 22 de pression P et de température abaissée.

Ce flux 22 et le flux 1 sont traités par l'unité de séparation de gaz 5 de manière à produire : un flux enrichi en hydrogène 6, un gaz résiduaire 7 et un gaz de purge 8 qui est mélangé avec le flux comprenant de l'hydrogène et des hydrocarbures 2 avant compression de ce dernier. Le procédé permet également de traiter un autre flux comprenant de l'hydrogène et des hydrocarbures 9, et équivalent au flux 2 mais provenant d'une autre purge. Ce flux 9 présente déjà une pression P ou légèrement supérieure à P ; il est donc directement traité par le dispositif 4 avec le mélange 21 issu du compresseur.

Par mise en oeuvre procédé tel que précédemment décrit, il est possible de réduire la taille de l'unité d'adsorption modulée en pression et de réduire les coûts de compression de l'unité (U) tout en augmentant le rendement en hydrogène. Le procédé permet en outre de produire, à la sortie du dispositif d'abaissement de température, un gaz de pétrole liquéfié, qui peut être un flux de haute valeur ajoutée, valorisable comme combustible.

Le procédé de l'invention présente également l'avantage de permettre une intégration énergétique naturelle entre le dispositif cryogénique permettant d'abaisser la température et le compresseur de l'unité d'adsorption modulée en pression.

### EXEMPLE

Deux flux gazeux comprenant de l'hydrogène sont traités au moyen d'une unité d'adsorption modulée en pression. Ces deux flux présentant les concentrations suivantes:

**Tableau 1**

| | Flux gazeux comprenant majoritairement de l'hydrogène | Flux gazeux comprenant de l'hydrogène et des hydrocarbures |
|---|---|---|
| | Débit Nm³/h | |
| | 10 000 | 5 200 |
| | Composition (% vol.) | |
| H₂ | 81,4 | 57 |
| C₁ | 9,3 | 23,7 |
| C₂ | 5 | 2,2 |
| C₃ | 2,6 | 5,35 |
| C₄ | 1,1 | 8,2 |
| C₅ | 0,6 | 2,9 |
| N₂ | 0 | 0,6 |

Ces flux sont traités par une unité d'adsorption modulée en pression selon l'invention comme illustré sur la figure 1 et par une unité d'adsorption modulée en pression selon l'art antérieur correspondant à l'unité d'absorption modulée en pression selon l'invention mais ne comprenant pas de moyen d'abaissement de la température du flux gazeux comprenant de l'hydrogène et des hydrocarbures de manière à condenser les hydrocarbures. Les caractéristiques du procédé selon l'art antérieur et du procédé selon l'invention sont détaillés dans le tableau 2.

**Tableau 2**

| | Procédé selon l'art antérieur | Procédé selon l'invention |
|---|---|---|
| Débit du flux gazeux (1) comprenant majoritairement de l'hydrogène (t/h) | 3,06 | 3,06 |
| Débit du flux gazeux (2) comprenant de l'hydrogène et des hydrocarbures (t/h) | 3,48 | 3,48 |
| Rendement en hydrogène | 82,3% | 82,6 % |
| Volume d'adsorbants (relatif) | 100 | 89,5 |
| Récupération | | |
| d'hydrocarbures (t/h) | | 2,02 |
| % mol C3 | | 21,2 |
| % mol C4 | | 51,4 |
| % mol C5 | | 27,4 |
| Energie dépensée par le compresseur (3) (kW) | 564 | 541 |
| Energie dépensée par le dispositif cryogénique (4) pour abaisser la température à -25°C (kW) | | 431 |

On constate que par la mise en oeuvre de l'invention, il est possible :
- de diminuer le volume des adsorbants de l'unité PSA de 10 % en volume,
- de diminuer la puissance du compresseur de 5 %, et
- d'augmenter le rendement en hydrogène de 0,3 points.

Par ailleurs, le flux d'hydrocarbures liquéfiés peut être valorisé comme produit commercial au sein de l'usine.

Le gaz de pétrole liquéfié issu du dispositif cryogénique est un produit de haute valeur ajoutée ce qui compense l'énergie supplémentaire dépensée par le dispositif cryogénique du procédé selon l'invention par rapport au procédé de l'art antérieur.

## Revendications

1. Procédé de production d'un flux gazeux (6) enrichi en hydrogène et d'un gaz de pétrole liquéfié (10) à partir d'au moins un flux gazeux (1) comprenant majoritairement de l'hydrogène de pression P et d'un flux gazeux (2, 9) comprenant de l'hydrogène et des hydrocarbures, dans lequel on met en oeuvre les étapes suivantes :
- au cours de l'étape a), on ajuste à la pression P le flux gazeux comprenant de l'hydrogène et des hydrocarbures (2, 9),
- au cours de l'étape b), on traite le flux gazeux (9, 21) comprenant de l'hydrogène et des hydrocarbures et ajusté à la pression P dans une unité (5) d'adsorption de gaz modulée en pression alimentée par le flux gazeux (1) comprenant majoritairement de l'hydrogène et présentant une pression P de manière à fournir :
. en une première sortie, le flux gazeux (6) enrichi en hydrogène présentant une concentration en hydrogène supérieure - à celle du flux gazeux comprenant majoritairement de l'hydrogène et,
. en une deuxième sortie, un flux résiduaire (7),
**caractérisé en ce qu'**entre l'étape a) et l'étape b), on abaisse la température du flux gazeux (9, 21) comprenant de l'hydrogène et des hydrocarbures et ajusté à la pression P de manière à condenser les hydrocarbures et à former le gaz de pétrole liquéfié (10).

2. Procédé selon la revendication 1, **caractérisé en ce que** le flux gazeux comprenant majoritairement de l'hydrogène présente une concentration en hydrogène comprise entre 50 et 99 % en volume.

3. Procédé selon la revendication 1 ou 2, **caractérisé en ce que** le flux gazeux comprenant de l'hydrogène et des hydrocarbures présente une concentration en hydrogène inférieure d'au moins 10 % par rapport à la valeur de la concentration en hydrogène du flux gazeux comprenant majoritairement de l'hydrogène.

4. Procédé selon l'une des revendications précédentes, **caractérisé en ce que** le flux gazeux comprenant de l'hydrogène et des hydrocarbures présente une concentration en hydrocarbures comprise entre 10 et 50 % en volume.

5. Procédé selon la revendication précédente, **caractérisé en ce que** l'unité de séparation de gaz est une unité d'adsorption modulée en pression PSA associée à un compresseur intégré, dans lequel on met en oeuvre, pour chaque adsorbeur de l'unité, un cycle de modulation de pression comprenant une succession de phases qui définissent des phases d'adsorption, de décompression, de purge et de remontée en pression, telle que :
- au cours de la phase d'adsorption :
. au cours d'une première étape, le flux gazeux comprenant majoritairement de l'hydrogène et présentant une pression P est mis en contact avec le lit de l'adsorbeur, et
au cours d'une deuxième étape, on introduit, au contact du lit de l'adsorbeur, le mélange de pression P dont la température a été abaissée de manière à condenser les hydrocarbures et constitué de :
. d'une part, du flux gazeux comprenant de l'hydrogène et des hydrocarbures, et
. d'autre part, du gaz de recycle du PSA,
de manière à adsorber les composés différents de l'hydrogène et à produire en tête du lit de l'adsorbeur le flux enrichi présentant une concentration en hydrogène supérieure à celle du flux gazeux comprenant majoritairement de l'hydrogène,
- au cours de la phase de décompression, le flux résiduaire du PSA est produit,
- lors de la phase de purge, un gaz de purge est produit,
- et où le gaz de recycle du PSA est soit le flux résiduaire comprimé à la pression P, soit le gaz de purge comprimé à la pression P.

6. Procédé selon l'une des revendications précédentes, **caractérisé en ce qu'**entre l'étape a) et l'étape b), on abaisse la température du flux gazeux comprenant de l'hydrogène et des hydrocarbures jusqu'à moins de 0°C.

7. Procédé selon l'une des revendications précédentes, **caractérisé en ce qu'**entre l'étape a) et l'étape b), on abaisse la température du flux gazeux comprenant de l'hydrogène et des hydrocarbures au moyen d'un dispositif cryogénique.

## Claims

1. Process for producing a hydrogen-enriched gas stream (6) and a liquefied petroleum gas (10) from at least one gas stream (1) mainly comprising hydrogen at pressure P and a gas stream (2, 9) comprising hydrogen and hydrocarbons, in which the following steps are carried out:
- during step a), the gas stream (2, 9) comprising hydrogen and hydrocarbons is adjusted to the pressure P;
- during step b), the gas stream (9, 21) comprising hydrogen and hydrocarbons and adjusted to the pressure P is treated in a pressure swing gas adsorption unit (5) fed will the gas stream (1) mainly comprising hydrogen and having a pressure P so as to supply:
. at a first outlet, the hydrogen-enriched gas stream (6) having a hydrogen concentration greater than that of the gas stream mainly comprising hydrogen; and
. at a second outlet, a waste stream (7),
**characterized in that** between step a) and step b), the temperature of the gas stream (9, 21) comprising hydrogen and hydrocarbons and adjusted to the pressure P is lowered so as to condense the hydrocarbons and form the liquid petroleum gas (10).

2. Process according to Claim 1, **characterized in that** the gas stream mainly comprising hydrogen has a hydrogen concentration between 50 and 99 vol%.

3. Process according to Claim 1 or 2, **characterized in that** the gas stream comprising hydrogen and hydrocarbons has a hydrogen concentration at least 10% lower relative to the value of the hydrogen concentration of the gas stream mainly comprising hydrogen.

4. Process according to one of the preceding claims, **characterized in that** the gas stream comprising hydrogen and hydrocarbons has a hydrocarbon concentration between 10 and 50 vol%.

5. Process according to the preceding claim, **characterized in that** the gas separation unit is a pressure swing adsorption PSA unit combined with an integrated compressor, in which, for each adsorber of the unit, a pressure swing cycle is carried out comprising a succession of phases which define the phases of adsorption, decompression, purge and pressure rise, such that:
- during the adsorption phase:
. during a first step, the gas stream mainly comprising hydrogen and having a pressure P is brought into contact with the bed of the adsorber; and
. during a second step, introduced into contact with the bed of the adsorber is the mixture of pressure P whose temperature has been lowered so as to condense the hydrocarbons and that is composed of:
. on the one hand, the gas stream comprising hydrogen and hydrocarbons; and
. on the other hand, the PSA recycle gas,
so as to adsorb the compounds other than hydrogen and to produce, at the top of the adsorber bed, the enriched stream having a hydrogen concentration greater than that of the gas stream mainly comprising hydrogen;
- during the decompression phase, the PSA waste stream is produced;
- during the purge phase, a purge gas is produced; and
- where the PSA recycle gas is either the waste stream compressed to the pressure P, or the purge gas compressed to the pressure P.

6. Process according to one of the preceding claims, **characterized in that** between step a) and step b), the temperature of the gas stream comprising hydrogen and hydrocarbons is lowered to at least 0°C.

7. Process according to one of the preceding claims, **characterized in that** between step a) and step b), the temperature of the gas stream comprising hydrogen and hydrocarbons is lowered by means of a cryogenic device.

## Patentansprüche

1. Verfahren zur Herstellung eines wasserstoffangereicherten Gasstroms (6) und eines Flüssiggases (10) aus mindestens einem Gasstrom (1), der hauptsächlich Wasserstoff enthält, mit einem Druck P und einem Gasstrom (2, 9), der Wasserstoff und Kohlenwasserstoffe enthält, bei dem man:
- im Lauf von Schritt a) den Druck P des Wasserstoff und Kohlenwasserstoffe enthaltenden Gasstroms (2, 9) auf den Druck P einstellt,
- im Lauf von Schritt b) den Wasserstoff und Kohlenwasserstoffe enthaltenden und auf den Druck P eingestellten Gasstrom (9, 21) in einer mit dem hauptsächlich Wasserstoff enthaltenden und einen Druck P aufweisenden Gasstrom (1) gespeisten Druckwechselgasadsorptionseinheit (5) behandelt, wobei man:
. an einem ersten Ausgang den wasserstoffangereicherten Gasstrom (6) mit einer höheren Wasserstoffkonzentration als der hauptsächlich Wasserstoff enthaltende Gasstrom und
. an einem zweiten Ausgang einen Reststrom (7) erhält,
**dadurch gekennzeichnet, daß** man zwischen Schritt a) und Schritt b) die Temperatur des Wasserstoff und Kohlenwasserstoffe enthaltenden und auf den Druck P eingestellten Gasstroms (9, 21) so senkt, daß die Kohlenwasserstoffe kondensieren und sich Flüssiggas (10) bildet.

2. Verfahren nach Anspruch 1, **dadurch gekennzeichnet, daß** der hauptsächlich Wasserstoff enthaltende Gasstrom eine Wasserstoffkonzentration zwischen 50 und 99 Vol-% aufweist.

3. Verfahren nach Anspruch 1 oder 2, **dadurch gekennzeichnet, daß** der Wasserstoff und Kohlenwasserstoffe enthaltende Gasstrom eine Wasserstoffkonzentration von weniger als 10%, bezogen auf den Wert der Wasserstoffkonzentration des hauptsächlich Wasserstoff enthaltenden Gasstroms, aufweist.

4. Verfahren nach einem der vorhergehenden Ansprüche, **dadurch gekennzeichnet, daß** der Wasserstoff und Kohlenwasserstoffe enthaltende Gasstrom eine Kohlenwasserstoffkonzentration zwischen 10 und 50 Vol.-% aufweist.

5. Verfahren nach dem vorhergehenden Anspruch, **dadurch gekennzeichnet, daß** es sich bei der Gastrennungseinheit um eine PSA-Druckwechseladsorptionseinheit in Kombination mit einem integrierten Verdichter handelt, in dem für jeden Absorber der Einheit ein Druckwechselzyklus mit einer Abfolge von Phasen, die die Phasen Adsorption, Druckminderung, Spülung und Wiederverdichtung definieren, durchgeführt wird, so daß:
- im Lauf der Adsorptionsphase:
. im Lauf eines ersten Schritts der hauptsächlich Wasserstoff enthaltende und einen Druck P aufweisende Gasstrom mit der Adsorberschüttung in Kontakt gebracht wird und
. im Lauf eines zweiten Schritts in Kontakt mit der Adsorberschüttung das Gemisch mit einem Druck P, dessen Temperatur so gesenkt worden ist, daß die Kohlenwasserstoffe kondensieren, und das
. zum einen aus dem Wasserstoff und Kohlenwasserstoffe enthaltenden Gasstrom und
. zum anderen aus dem PSA-Rezyklierungsgas besteht, eingetragen wird, so daß die von Wasserstoff verschiedenen Verbindungen adsorbiert werden und an der Spitze der Adsorberschüttung der angereicherte Strom mit einer höheren Wasserstoffkonzentration als der hauptsächlich Wasserstoff enthaltende Gasstrom anfällt,
- im Lauf der Druckminderungsphase der PSA-Reststrom anfällt,
- während der Spülphase ein Spülgas anfällt
- und wobei das PSA-Rezyklierungsgas entweder der auf den Druck P verdichtete Reststrom P oder das auf den Druck P verdichtete Spülgas ist.

6. Verfahren nach einem der vorhergehenden Ansprüche, **dadurch gekennzeichnet, daß** man zwischen Schritt a) und Schritt b) die Temperatur des Wasserstoff und Kohlenwasserstoffe enthaltenden Gasstroms auf mindestens 0°C senkt.

7. Verfahren nach einem der Ansprüche, **dadurch gekennzeichnet, daß** man zwischen Schritt a) und Schritt b) die Temperatur des Wasserstoff und Kohlenwasserstoffe enthaltenden Gasstroms mit Hilfe einer Tieftemperaturvorrichtung senkt.
